Europäisches Patentamt

European Patent Office

Office européen des brevets

(19)

(11) Veröffentlichungsnummer: **0 285 011**
**A2**

(12) **EUROPÄISCHE PATENTANMELDUNG**

(21) Anmeldenummer: **88104787.2**

(22) Anmeldetag: **25.03.88**

(51) Int. Cl.⁴: **B02C 18/40**

(30) Priorität: **01.04.87 DE 3710967**
**08.12.87 DE 8716200 U**

(43) Veröffentlichungstag der Anmeldung:
**05.10.88 Patentblatt 88/40**

(84) Benannte Vertragsstaaten:
**AT CH DE FR GB LI**

(71) Anmelder: **Rössler, Kurt**
**Blankenburgerstrasse 21a**
**D-4550 Bramsche 1(DE)**

(72) Erfinder: **Rössler, Kurt**
**Blankenburgerstrasse 21a**
**D-4550 Bramsche 1(DE)**

(74) Vertreter: **Busse & Busse Patentanwälte**
**Postfach 1226 Grosshandelsring 6**
**D-4500 Osnabrück(DE)**

(54) **Zerkleinerungsvorrichtung.**

(57) Die Zerkleinerungsvorrichtung für gewerbliche bzw. industrielle Abfälle umfaßt einen Aufnahmebehälter (1) mit vertikaler Behälterhauptachse (2) für das Zerkleinerungsgut, der zumindest in seinem unteren Bereich ian einen Trichter (3;4) mit Austrittsöffnung (5) übergeht, ein der Austrittsöffnung zugeordnetes Schneidwerk, das einen mittels eines Antriebsmotors um die Behälterhauptachse (2) in Umlauf versetzbaren Rotor (6) aufweist, und ein mit dem Rotor (6) umlaufendes, im Innenraum des Trichters (3;4) oberhalb der Austrittsöffnung (5) wirksames Brech-und Förderwerkzeug (7;8). Das Brech- und Förderwerkzeug (7;8) hat dabei die Gestalt einer gegenüber der Horizontalen leicht geneigt angeordneten Platte (70;80) mit zumindest annähernd elliptischer Umrißkontur.

Figur 2

## Zerkleinerungsvorrichtung

Die Erfindung bezieht sich auf eine Zerkleinerungsvorrichtung für gewerbliche bzw. industrielle Abfälle gemäß dem Oberbegriff des Anspruchs 1.

Bekannte Zerkleinerungsvorrichtungen dieser Art dienen der Trockenzerkleinerung von feststückigen Gegenständen, insbesondere aus Holz. Der kreiskegelige, gelegentlich auch pyramidenstumpfförmige Trichter hat eine horizontale Austrittsöffnung an seinem unteren Ende, und die Schneidmesser des Rotors, der einen Langsamläufer bildet, durchlaufen eine ringförmige, im wesentlichen horizontale Schneidangriffsfläche (DE-PS 27 01 879, DE-PS 29 28 471).

Für die Zerkleinerung von Abfällen aus Pappe, Papier, Kunststoff od. dgl. Zerkleinerungsgütern, wie sie vornehmlich bei Verpackungsfällen anfallen, finden Zerkleinerungsvorrichtungen Anwendung, die im allgemeinen einen Trichter prismatischer Grundgestalt aufweisen, dessen Austrittsöffnung im wesentlichen horizontal ausgerichtet ist. Dabei ist die Vorrichtung mit einem Schneidwerk versehen, das einen als Schnelläufer um eine horizontale Drehachse umlaufenden, mit Schneidmessern besetzten Rotor oder ein Paar solcher Rotoren umfäßt. Schneidvorrichtungen derartiger Ausbildung (DE-OS 19 15 559) haben zwar eine verhältnismäßig hohe, zumeist den Anfall übersteigende Zerkleinerungsleistung, neigen jedoch bei zu starker Beschichkung mit insbesondere flachem, flexiblen Zerkleinerungsgut zum Festsetzen. Bei schwacher Beschichtung und volumigem Zerkleinerungsgut übt der Rotor aufgrund seiner hohen Drehzahl eine erher abweisende Wirkung aus, was auch für Doppelrotoren gilt.

Der Erfindung liegt die Aufgabe zurgrunde, eine Zerkleinerungsvorrichtung zu schaffen, die weitgehend unabhängig vom Grad der Befüllung des Aufnahmebehälters mit Zerkleinerungsgut eine zwangläufige, geordnete Zufuhr von Zerkleinerungsgut zum Schneidwerk und damit eine zuverlässige Zerkleinerung mit hoher Leistung gewährleistet.

Diese Aufgabe löst die Erfindung mit den Merkmalen des Anspruchs 1. Hinsichtlich wesentlicher weiterer Ausgestaltungen wird auf die Patentansprüche 2 bis 19 verwiesen.

Die Ausbildung der Vorrichtung nach der Erfindung schafft einen Zwangstransport für das Zerkleinerungsgut im Trichter auf dem Wege zum Schneidwerk, durch den eine zuverlässige Gutzufuhr zum Schneidwerk unabhängig von der Gutsäule im Aufnahmebehälter gesichert ist. Die verhältnismäßig klein bauende Vorrichtung verarbeitet Holz und ähnliche feste, splitternde Zerkleinerungsgüter, insbesondere aber auch Papier, Kunststoffolie, Pappen u.dgl. Materialien, die sich bisher einer Verarbeitung durch Langsamläufer entzogen haben.

Die Abstufung der das Brech-und Förderwerkzeug bildenden Platte schafft dabei eine besonders wirkungsvolle Erfassung und Förderung von Papier, Kunststoffolie und ähnlichen nachgiebigen bzw. kompressiblen Zerkleinerungsgütern im Trichter des Aufnahmebehälters, so daß eine sichere und blockierfreie Zuführung solcher Zerkleinerungsgüter zum Schneidwerk gewährleistet ist. Die Ausführung der Platte mit einer Zahnung an zumindest einer Langseite der Plattenrandkante unterstützt bei abgestufter Platte die Erfassungs- und Förderwirkung insbesondere bei der Verarbeitung von Kartonagen, begünstigt jedoch auch ohne Abstufung der Platte bei insbesondere Holz und ähnlichen festen Zerkleinerungsgütern ein zuverlässiges Erfassen, Vorbrechen und Fördern zum Schneidwerk hin.

Der auf der Oberseite der ebenen oder abgestuften Platte angeordnete, sich unter einem spitzen Winkel über diese erstreckende Förderarm, der sich bis in den unteren Bereich des zylindrischen Hauptteils des Aufnahmebehälters hocherstrecken kann, vermeidet eine Brückenbildung von Gut im Aufnahmebehälter, wobei er im Bereich seines freien Endes eine abwärts gerichtete Druckwirkung auf in seinem Wirkungsbereich befindliches Zerkleinerungsgut ausübt, während der an die Plattenoberseite angrenzende Teil eine nach außen gerichtete Druckwirkung auf Zerkleinerungsgut erbringt.

Weitere Vorteile und Einzelheiten ergeben sich aus der nachfolgenden Beschreibung und der Zeichnung, in der zwei Ausführungsbeispiele einer erfindungsgemäßen Zerkleinerungsvorrichtung - schematisch näher veranschaulicht sind. In der Zeichnung zeigen:

Fig. 1 eine schematische, abgebrochene Seitenansicht einer ersten Ausführung einer erfindungsgemäßen Zerkleinerungsvorrichtung, teilweise im Schnitt,

Fig. 2 eine Draufsicht zu Fig. 1,

Fig. 3 eine Seitenansicht ähnlich Fig. 1 zur Veranschaulichung einer zweiten Ausführung einer Zerkleinerungsvorrichtung nach der Erfindung,

Fig. 4 eine Draufsicht zu Fig. 3,

Fig. 5 eine Darstellung ähnlich Fig. 1 zur Veranschaulichung einer mit einem zusätzlichen Förderarm ausgerüsteten Ausführung,

Fig. 6 eine Draufsicht zu Fig. 5,

Fig. 7 eine Darstellung ähnlich Fig. 3 zur Veranschaulichung einer mit einem Reißwerkzeug versehenen vierten Ausführung, und

Fig. 8 eine Draufsicht zu Fig. 7.

Die in der Zeichnung veranschaulichten Zerkleinerungsvorrichtungen, die zur Zerkleinerung von gewerblichen bzw. industriellen Abfällen bestimmt sind, umfassen im einzelnen einen Aufnahmebehälter 1 mit vertikaler Behälterhauptachse 2 für Zerkleinerungsgut, der zumindest in seinem unteren Bereich in einen Trichter 3 bzw. 4 übergeht. Der Trichter 3,4 umgrenzt in seinem unteren Bereich eine Austrittsöffnung 5, der ein Schneidwerk zugeordnet, im vorliegenden Falle nachgeordnet ist.

Dieses im einzelnen nicht näher veranschauliche Schneidwerk, das irgendeine geeignete Ausbildung haben kann, besitzt einen mittels eines Antriebsmotors um einen vertikale Drehachse, die mit der Behälterhauptachse 2 zusammenfällt, in Umlauf versetzbaren Rotor 6, der in seinem oberen Bereich fest mit einem mit diesem umlaufenden, im Innenraum des Trichters 3,4 oberhalb der Austrittsöffnung 5 wirksamen Brech-und Förderwerkzeug 7 bzw. 8 verbunden ist.

Dieses Brech-und Förderwerkzeug 7,8 hat die Gestalt einer gegenüber der Horizontalen leicht geneigt angeordneten Platte 70 bzw. 80, welche eine elliptische Umrißkontur besitzt. Die Neigung der Platte 70,80 liegt im Bereich von 5 - 45° und beträgt vorzugsweise 15°. Die Platte 70,80 erstreckt sich endseitig bis nahe an die Innenwand des Trichters 3,4 heran und ist verhältnismäßig dünn, bildet dabei jedoch ein starres Werkzeug.

Die Platte 70,80 kann zentrisch zum Rotor 6 auf diesem mittels eines Fortsatzes 9 festgelegt sein, ist jedoch vorzugsweise, wie das auch in der Zeichnung dargestellt ist, exzentrisch angeordnet, so daß die Dreh-und Behälterhauptsache 2 die Ellipsenhauptachse 71;81 der elliptischen Umrißkontur der Platte 70;80 in einem Abstand zum Plattenzentrum 72,82 schneidet.

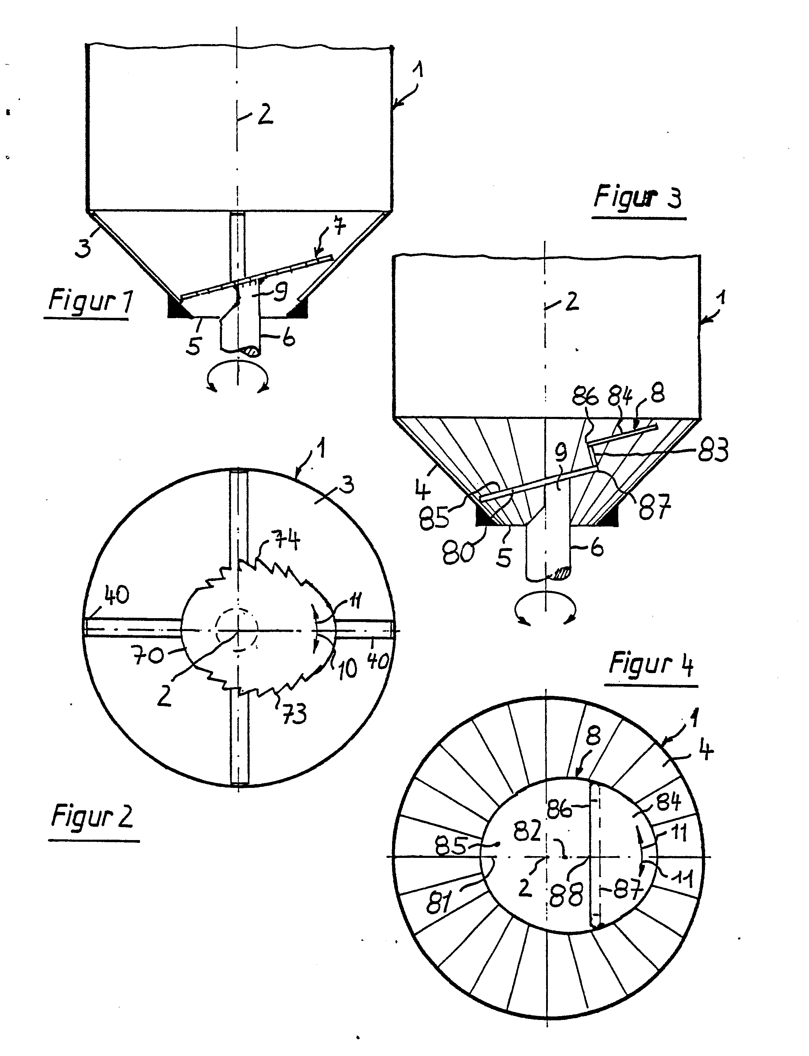

Bei der Ausführung nach Fig. 1, 2 und 5,6 weist die Platte 70 auf ihren beiden Langseiten eine im mittleren Bereich gezahnte Randkante 73,74 auf, wobei die Zahnung in der zugehörigen Drehrichtung 10 bzw. 11 sägezahnförmig ausgebildet ist. Arbeitet die Schneidvorrichtung beispielsweise lediglich in einer Drehrichtung 10, kann die zweite Zahnung 74 entfallen, die beim dargestellten Beispiel wegen des in beiden Drehrichtungen 10,11 vorgesehenen Betriebs erforderlich ist. Die Endbereiche der Platte 70, die der Ellipsenhauptachse 71 zugeordnet sind, können unverzahnt bleiben, statt dessen aber auch verzahnt werden.

Der Trichter 3 bildet bei der Ausführung nach Fig. 1, 2 5,6 einen Kreiskegelstumpf und weist auf seiner Innenwand eine Anzahl von vier Widerlagerleisten 40 auf, die bei dem dargestellten Beispiel in einem gleichen gegenseitigen Winkelabstand von 90° angeordnet und dabei radial ausgerichtet sind.

Statt dessen kann der Trichter bei der Ausführung nach Fig. 1,2 und 5,6 auch die bei der Ausführung nach Fig. 3,4 und 7,8 veranschaulichte Ausbildung haben, bei der der Trichter 4 als vieleckiger, vorzugsweise zwölfeckiger, Kegelstumpf ausgebildet ist. Die vieleckige, jedenfalls acht-oder mehreckige Kegelstumpfform bietet ihrerseits Widerlagerkanten dar, welche die Aufgaben der Widerlagerleisten 40 bei der Ausführung nach Fig. 1, 2 und 5,6 übernehmen.

Die Platte 80 in Fig. 3,4 und 7,8 weist eine aufwärts gerichtete Abstufung 83 auf, die wie bei dem Beispiel nach Fig. 3,4 und 7,8 bevorzugt durch einen Parallelversatz eines Außenteils 84 gegenüber deren Hauptteil 85 gebildet ist. Dabei haben zweckmäßig die die Abstufung begrenzenden Stufenkanten 86,87 in Draufsicht auf die Platte 80 eine zumindest annähernd senkrecht zur Ellipsenhauptachse 81 verlaufende Ausrichtung. Eine solche Ausgestaltung ist insbesondere bei einer Platte 80 sinnvoll, die ein in beiden Drehrichtungen 10,11 antreibbares Werkzeug 8 bildet. In Fällen, in denen das Werkzeug 8 lediglich in einer Drehrichtung anzutreiben ist, drehrichtungssymmetrische Verhältnisse deshalb keine Rolle spielen, kann sowohl vom Parallelversatz als auch von der rechtwinkligen Stufenkantenausrichtung abgewichen werden. Dies gilt auch für die bevorzugte Anordnung der die Abstufung 83 begrenzenden Stufenkanten 86,87 in einer mit der Plattenoberseite einen rechten Winkel einschließenden Ebene.

Je nach der Art der zu verarbeitenden Zerkleinerungsgüter und je nach gewünschtem Durchsatz entspricht die Stufenhöhe 1 - 18% der - entlang der Ellipsenhauptachse 81 gemessenen Plattenlänge. Bei einer Plattenlänge von beispielsweise 700 mm bewegt sich dementsprechend die Höhe der Abstufung in der Größenordnung von etwa 10 bis etwa 100 mm.

Der Abstand des Schnittpunktes 88 der in der Plattenoberfläche gelegenen Stufenkante 86 mit der Ellipsenhauptachse 81 zur Drehachse 2 des Rotors 6 des Schneidwerks liegt bevorzugt im Bereich des 0,1 - 0,5-fachen der Plattenlänge, vorzugsweise bei etwa dem 0,25-fachen. Diese Abstufung bestimmt die Abmessung des abgestuften Außenteils 84 der Platte 80 und beeinflußt dadurch ebenfalls die Förderwirkung und damit den Durchsatz.

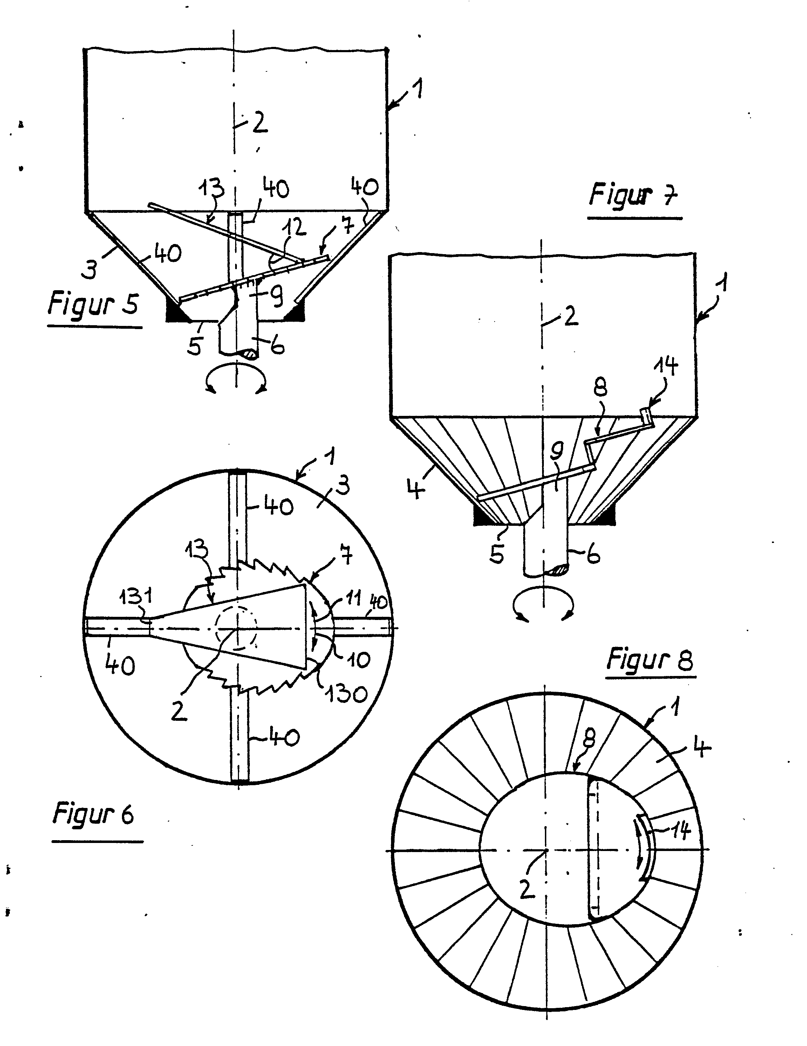

Die in Fig. 5 und 6 veranschaulichte Ausführung entspricht im wesentlichen der nach Fig. 1 und 2, umfaßt jedoch einen Förderarm, der auf der Oberseite der Platte 70 angebracht ist und sich zu dieser unter einem spitzen Winkel 12 von 20°-40°, vorzugsweise 30°, erstreckt. Dabei ist der Förderarm 13 mit dem oberen, der Ellipsenhauptachse 71 zugeordneten Plattenende verbunden und erstreckt sich in einer mit der Ellipsenhauptachse zusammenfallenden Richtung, wobei er zumindest bis über die Behälterhauptachse 2 hinaus vorspringt. Bevorzugt erstreckt sich der Förderarm 13 jedoch über die Randkante des seiner Befestigungsstelle gegenüberliegenden Plattenendes hinaus und dabei soweit hoch, daß er bis in den unteren Bereich des zylindrischen Teils des Aufnahmebehälters 1 vorragt.

Der Förderarm 13 ist bevorzugt von einem Flachkörper, z.B. von einem Plattenausschnitt, gebildet, und die Basiskante 130 des Förderarms 13 verläuft vorzugsweise in Draufsicht senkrecht zur Ellipsenhauptachse 71 der Platte 70. Dabei hat bevorzugt der Förderarm 13 an seiner Basiskante 130 eine größere Breite als an seinem freien Ende 131.

Der Förderarm 13 kann auch bei einer abgestuften Platte 80 gemäß den Fig. 3,4 bzw. 7,8 eingesetzt werden, insbesondere wenn die Zerkleinerungsvorrichtung sehr leichte kompressible Zerkleinerungsgüter wie Furnierreste etc. verarbeiten soll. In diesem Falle erhält der Förderarm 13 vorzugsweise eine Anordnung derart, daß die Basiskante 130 mit der oberen Stufenkante 86 der Abstufung 83 zusammenfällt.

Wie die Fig. 7 und 8 erkennen lassen, die eine den Fig. 3 und 4 entsprechende Ausführung zeigen, ist am oberen, der Ellipsenhauptachse 81 zugeordneten Ende der Platte 80 ein aufwärts vorstehendes Reißwerkzeug 14 vorgesehen, das die Form eines gebogenen Flachsteges hat, der messerförmig angeschärfte Enden besitzt. Eine solche Ausgestaltung ist insbesondere bei der Verarbeitung von ballenförmig aufgegebenem Zerkleinerungsgut bedeutungsvoll.

## Ansprüche

1. Zerkleinerungsvorrichtung für gewerbliche bzw. industrielle Abfälle, mit einem Aufnahmebehälter (1) mit vertikaler Behälterhauptachse (2) für das Zerkleinerungsgut, der zumindest in seinem unteren Bereich in einen Trichter (3;4) übergeht, welcher in seinem unteren Bereich eine Austrittsöffnung (5) umgrenzt, mit einem der Austrittsöffnung zugeordneten Schneidwerk, das einen mittels eines Antriebsmotors um die Behälterhauptachse (2) in Umlauf versetzbaren Rotor (6) umfaßt, und mit einem mit dem Rotor (6) umlaufenden, im Innenraum des Trichters (3;4) oberhalb der Austrittsöffnung (5) wirksamen Brech- und Förderwerkzeug (7;8), **dadurch gekennzeichnet,** daß das Brech- und Förderwerkzeug (7;8) die Gestalt einer gegenüber der Horizontalen leicht geneigt angeordneten Platte (70;80) mit zumindest annähernd elliptischer Umrißkontur, hat.

2. Vorrichtung nach Anspruch 1, **dadurch gekennzeichnet,** daß die Platte (80) in einem von der Ellipsenhauptachse (81) ihrer Umrißkontur durchlaufenen Teilbereich eine aufwärtsgerichtete Abstufung (83) aufweist.

3. Vorrichtung nach Anspruch 2, **dadurch gekennzeichnet,** daß die Abstufung (83) durch einen Parallelversatz eines Außenteils (84) der Platte (80) gegenüber deren Hauptteil (85) gebildet ist.

4. Vorrichtung nach Anspruch 2 oder 3, **dadurch gekennzeichnet,** daß die die Abstufung (83) begrenzenden Stufenkanten (86,87) in einer Draufsicht auf die Platte (80) etwa senkrecht zur Ellipsenhauptachse (81) ausgerichtet sind.

5. Vorrichtung nach einem der Ansprüche 2 bis 4, **dadurch gekennzeichnet,** daß die die Abstufung (83) begrenzenden Stufenkanten (86,87) in einer mit der Plattenoberseite einen rechten Winkel einschließenden Ebene gelegen sind.

6. Vorrichtung nach einem der Ansprüche 2 bis 5, **dadurch gekennzeichnet,** daß die Stufenhöhe 1 - 18% der - entlang der Ellipsenhauptachse (81) gemessenen - Plattenlänge entspricht.

7. Vorrichtung nach einem der Ansprüche 2 bis 6, **dadurch gekennzeichnet,** daß der Abstand des Schnittpunktes (88) der in der Plattenoberfläche gelegenen Stufenkante (86) mit der Ellipsenhauptachse (81) zur Drehachse (2) des Rotors (6) das 0,1 bis 0,5-fache der Plattenlänge beträgt.

8. Zerkleinerungsvorrichtung nach einem der Ansprüche 1 bis 7, **dadurch gekennzeichnet,** daß die Platte (70;80) zumindest auf ihrer einen Langseite eine zumindest im mittleren Bereich gezahnte Randkante (73;74) aufweist.

9. Vorrichtung nach Anspruch 8, **dadurch gekennzeichnet,** daß die Zahnung in Drehrichtung (10;11) der Platte (70;80) sägezahnförmig ausgebildet ist.

10. Vorrichtung nach einem der Ansprüche 1 bis 9, **dadurch gekennzeichnet,** daß auf der Oberseite der Platte (70;80) ein sich unter einem spitzen Winkel (12) zur Plattenoberseite erstreckender Förderarm (13) angebracht ist, der sich vom oberen, der Ellipsenhauptachse (71;81) zugeordneten Plattenende entlang der Ellipsenhauptachse (71;81) vorerstreckt.

11. Vorrichtung nach Anspruch 10, **dadurch gekennzeichnet,** daß sich der Förderarm (13) zumindest bis über die Behälterhauptachse (2) hinauserstreckt.

12. Vorrichtung nach Anspruch 10 oder 11, **dadurch gekennzeichnet,** daß der Winkel (12) zwischen Förderarm (13) und Platte (70;80) 20°-40°, vorzugsweise 30°, beträgt.

13. Vorrichtung nach einem der Ansprüche 10 bis 12, **dadurch gekennzeichnet,** daß der Förderarm (13) von einem Flachkörper (130) gebildet ist, die Basiskante des Förderarms (13) in Draufsicht senkrecht zur Ellipsenhauptachse (71;81) der Platte (70;80) verläuft, und der Förderarm (13) an seiner Basiskante (130) eine größere Breite als an seinem freien Ende (131) aufweist.

14. Vorrichtung nach einem der Ansprüche 10 bis 13, **dadurch gekennzeichnet,** daß die Basiskante (130) eines auf einer abgestuften Platte (80) angebrachten Förderarms (13) mit deren oberen Stufenkante (86) zusammenfällt.

15. Vorrichtung nach einem der Ansprüche 1 bis 14, **dadurch gekennzeichnet,** daß am oberen, der Ellipsenhauptachse zugeordneten Ende der Platte (70;80) ein aufwärts vorstehendes Reißwerkzeug (14) vorgesehen ist.

16. Vorrichtung nach Anspruch 15, **dadurch gekennzeichnet,** daß das Reißwerkzeug (14) von einem sich entlang der Plattenrandkante erstreckenden, an seinen Enden angeschärften gebogenen Flachsteg gebildet ist.

17. Vorrichtung nach einem der Ansprüche 1 bis 16, **dadurch gekennzeichnet,** daß der Trichter (4) als vieleckiger Kegelstumpf ausgebildet ist.

18. Vorrichtung nach Anspruch 16, **dadurch gekennzeichnet,** daß der Trichter (4) als zwölfeckiger Kegelstumpf ausgebildet ist.

19. Vorrichtung nach einem der Ansprüche 1 bis 16, **dadurch gekennzeichnet,** daß der Trichter (3) als Kreiskegelstumpf ausgebildet ist und auf seiner Innenwand eine Anzahl von in gleichmäßigem gegenseitigen Winkelabstand angeordneten, radial ausgerichteten flachen Widerlagerleisten (40) trägt.

Figur 3

Figur 1

Figur 2

Figur 4

Figur 7

Figur 5

Figur 6

Figur 8